# EUROPEAN PATENT SPECIFICATION

(11) **EP 3 063 448 B1**
(45) Date of publication and mention of the grant of the patent: **18.07.2018**
(21) Application number: 14786161.1
(22) Date of filing: 14.10.2014
(51) Int. Cl.: F16L 5/04, F16L 5/10, F16L 5/14, H02G 3/22

(54) **METHOD FOR PROVIDING A PIPE TRANSIT SYSTEM**
VERFAHREN ZUM BEREITSTELLEN EINES ROHRTRANSITSYSTEMS
PROCÉDÉ POUR PRÉPARER UN SYSTÈME DE PASSAGE DE TUYAU

(30) Priority: 31.10.2013 NL 1040476
(43) Date of publication of application: 07.09.2016
(73) Proprietor: Beele Engineering B.V., 7122 NZ Aalten (NL)
(72) Inventor: BEELE, Johannes Alfred, 7122 NZ Aalten (NL)
(74) Representative: Hoffmann Eitle
(86) International application number: PCT/EP2014/071981
(87) International publication number: WO 2015/062856

(56) References cited:
- WO-A1-00/59998
- WO-A1-02/052187
- WO-A1-2007/107342
- FR-A2- 2 179 523
- US-A1- 2004 016 190

## Description

The invention is related to a method for providing a pipe transit system.

### Background of the Invention

In most man-made constructions having more than one compartment a pipe may be used for transport of flowable media from one compartment to another compartment or for transport of these flowable media from one side of the construction to another side of the construction. Such pipes may also be used for transport of flowable media into a construction.

Normally compartments are separated by partitions, such as floors, decks, walls, ceilings, etc. For ensuring that a pipe can extend through the partition, an opening is provided in the partition, usually in a shape of a tubular passage, also referred to as a conduit. The diameter of the pipe extending through the opening, such as a conduit, is smaller than the diameter of the opening. The annular space surrounding the pipe in the conduit needs to be sealed off. The quality of that sealing is usually the subject of regulations which take into account the conditions to which the sealing may be exposed under normal circumstances and in the exceptional and unfortunate circumstances such as the occurrence of a nearby fire.

Such a pipe transit system may also be used, for instance, for two pipes having mutually different diameters connected with each other so that the fluid can flow through both pipes. One of the pipes may, for instance, form a house service connection and have a smaller diameter than a pipe which forms the main line. Such pipes may be used, for instance, for transporting water, gas, oils, liquids, chemicals, etc. The space between the two pipes may also be sealed by a system to which the invention relates.

Even though a pipe is more often used for transport of flowable media, it is for the pipes used in relation with the presently proposed invention, not at all excluded that the pipe also contains cables, for instance, for telephone, electricity, optical signals, etc. The system provided by the method to which the invention relates may be used for walls of buildings, particularly foundation walls and floors but also ceilings or roofs where, by whatever method, the conduit is positioned in the wall, floor, ceiling or roof.

Particularly, the system provided by the method to which the invention relates can be used in the construction and/or maintenance of ships and offshore installations. Sections in such constructions are usually formed by placing prefabricated partitions according to a predetermined plan, in the case of a vessel, in a dock of a shipyard. Even before the partitions are placed, feed-through conduits can be provided in the partitions, for instance with the aid of a welding method. After feeding through a pipe through the conduit, a sealing needs to be put in a space between the inner wall of the conduit and the outer wall of the pipe, to complete the pipe transit system.

Systems provided by the method to which the invention relates, particularly in ships and in offshore installations, are meant to be watertight as well as fire-resistant.

GB 2186442 describes a transit system for pipes. The system comprises a metal frame having an opening filled with lead-through blocks and blanking blocks. The lead-through blocks comprise two half blocks which together can form a block surrounding a pipe. The remaining space in the opening is filled up with blank blocks. In this way, the space between the inner wall of the conduit, in this case a metal frame, and the pipes extending through the conduit or metal frame is filled up with blocks. It is possible that a stay plate is positioned between each layer of blocks. Pressure is then applied to the assembled blocks to compress the blocks around the pipe and to clamp them together, against the side walls of the frame and to the stay plate. For this purpose, the system comprises a compression and packer system. Pressure can be applied by a system that requires tightening of nuts or compression bolts. The forces needed for compression are very high and partly passed onto the ducted pipe, often non-hydrostatically. The system cannot distribute the load evenly throughout the stacking of the pipes. In fact, the ducted pipe will carry a part of the load and prevent an even distribution. The blocks which are "in the shade of the ducted pipe" and much less subjected to compression can easily be forced out. Another problem is the irreversible deformation of the rubber, which reduces the flexibility of the transit system which can be detrimental when a part of the system is suddenly exposed to a much higher pressure.

Apart from the fact that this prior art system is difficult to install, is time-consuming, costly and requires a large inventory control, the system further works unsatisfactorily in the long-run. Rubber, even well vulcanized rubber, has natural relaxation occurring over time. When the rubber has not been properly saturated or vulcanized, also chemical relaxation can occur. This enhances the overall relaxation of the rubber. As a consequence of this, compression bolts or nuts of the compression and packer system described in GB 2186442, needs to be retightened frequently. A further problem is that a change in temperature will due to thermal expansion or shrinkage result in loosening or overtightening, resulting in respectively weakening the sealing and irreversible deformation of the rubber.

Clearly, it is highly questionable whether the above-described prior art system remains watertight after a relatively long period of use.

Given a number of accidents, particularly on cruise ships, there is now a drive for demanding improved pipe transit systems. A new interpretation of SOLAS (Safety Of Life At Sea) II-1, Part B-2, Regulation 13, para. 2.3, is currently applied. Regulation para. 2.3 states: "Lead or heat-sensitive materials shall not be used in systems which penetrate watertight bulkheads, where deterioration of such systems in the event of fire would impair the watertight integrity of the bulkheads". This interpretation is generally referred to as the requirement for "watertightness after fire". Such watertightness after fire has to be tested, during experiments which last up to several days. The pipe transit system, as exposed to fire, will then subsequently be exposed to a water pressure which is raised up to several bars, and at least three bars (corresponding with the pressure of 30 meters below the waterline).

In relation to this new interpretation, reference is now made to WO 2007/107342 and WO 2008/023058, and particularly Fig. 10 thereof. Disclosed is a system comprising a conduit having an inner wall and a pipe extending through the conduit in an axial direction thereof, so that the conduit has a part that is occupied by the pipe. The system further comprises two sealing devices, one inserted in each end of the conduit. These prior art documents explain that it is preferred that the volume of the air entrapped in the conduit between the ends of the sealing devices is as short as possible. This may be achieved by providing a conduit having a length that is just a little bit more than the total length of the two sealing devices, or by insertion of a rubber sleeve (shown in Fig. 10 of these prior art documents by dashed lines) in the conduit sleeve so that the sleeve is positioned between the two sealing devices. It is explained that the air gap between the sealing devices works as thermal insulation. If, as a result of thermal expansion of the air trapped, the pressure of the air gap is built up, the air gap itself may work as a blocking element (against further insertion of a sealing device), facilitating compression of the sealing device that also experiences high pressure from the end of the conduit into which it had been inserted.

This system, designed to provide for a dynamic response to a sudden pressure shock occurring at one end of the conduit, for instance a high pressure wave as the result of a sudden entering of water in a compartment, a tsunami, etc., functions well under the circumstances for which it had been designed. However, a further improvement making this system also easily meeting the "watertight after fire" requirement, is still desirable.

### Summary of the invention

The invention is defined in the appended claim 1. It provides a pipe transit system comprising a conduit having an inner wall and at least one pipe extending through the conduit in an axial direction thereof so that a conduit has a pipe-part that is occupied by the at least one pipe. The system further comprises a first and a second sealing device inserted in the conduit each for sealing between the inner wall of the conduit and the at least one pipe, so that the conduit also has a sealed part. In the sealed-part between the first and second sealing device at least one third sealing device for sealing between the inner wall of the conduit and the at least one pipe is positioned. Each of the sealing devices is a separate entity and is unconnected to any of the other respective sealing devices.

An advantage of this pipe transit system provided by the method of the invention is that the third sealing device which is positioned between the first and second sealing device necessarily had to be put in the conduit before both of the first and second sealing device were positioned. This means that the part of the conduit which is occupied by this third sealing device, that ends up between the first and second sealing device, cannot be occupied by air. As a consequence thereof, the length of the conduit that contains air when one of the first and/or second sealing device is inserted is shorter as compared to a situation in which no third sealing device is present. Thus, the air that needs to be compressed when one of the first and/or second sealing devices is inserted, will be compressed into a much smaller volume as compared to a situation in which no "in-between" sealing device had been inserted previously into the conduit. The resistance felt by the second and a first sealing device will, due to the smaller volume available for compression of the air, be relatively high, given that the pressure will rapidly reach a relatively high level. This will have triggered a workman inserting one of the other two sealing devices to release the pressurized air from the gap, for instance by wedging in a small screwdriver between the outside of the sealing device and the inner wall of the conduit or the inside of the sealing device and the outside of the pipe, for release of the pressurized air, to then withdraw the screwdriver completely.

The end result is that a pipe transit system having more but smaller air gaps is provided and that thus also a much better thermal insulation is provided (each air gap is a good thermal insulator). There is also much less chance that the pressure in an air gap is already at a relatively high point before being heated by a fire that takes place in a nearby environment (given that during installation most likely air has been released from the air gap). Thus, a pipe transit system having more stability upon exposure to heat is provided. Further, the "extra" sealing device in-between the first and the second sealing device also provides mechanical stability in the transit and resistance against deformation. Notably, particularly when the partition is of metal, bulging may occur, sometimes leading to loosening of the sealing devices and even propelling the devices out of the conduit. However, the third plug stabilizes the entire transit and as such enhances safety.

Thus, when a fire takes place nearby, it will take longer before the sealing device at the unexposed side loses its sealing integrity, if at all. This is because it takes a long time before the temperature increase becomes significant at a side of the conduit that is unexposed to the fire. Each air gap provides thermal insulation. The temperature increase will particularly be suppressed if also insulation material is applied against the partition and the outer side of the conduit. Further, it takes a long time before the air in the gap reaches a high pressure, and it will take longer before the pressure has reached a level up to a point that it might contribute to pushing a sealing device out of the conduit. Also the mechanical stability of the entire transit system is improved.

This all greatly contributes to the integrity of the overall sealing, first of all by keeping the temperature at the side that is unexposed to the fire relatively low so that also after fire the sealing device at the end of the conduit which is not directly exposed to the fire, continues to provide a watertight sealing. Secondly, the stability of the sealing upon exposure to heat is improved in that it is less likely that a sealing device is already pushed out of the conduit at an early stage of heating the conduit.

In an embodiment of a pipe transit system provided by the method according to the invention, the sealed-part has an axial length which corresponds to the length of the conduit. In such an embodiment, the widths of the air gaps are minimal, so that the advantages described above are optimal. Each air gap provides thermal insulation which is important. However, these gaps will not be at the expense of mechanical stability.

In an embodiment of a pipe transit system provided by the method according to the invention, the sum of the axial lengths of the first, the second and the third sealing device corresponds to the axial length of the conduit. Also here, the air gaps are minimal, so that the advantages as described above are optimal.

In an embodiment of a pipe transit system provided by the method according to the invention, at least one of the first and the second sealing device has a flange for hindering a full insertion of that sealing device into the conduit. Accordingly, that sealing device cannot be inserted any further when the end of the conduit abuts the flange. Thus, the length of the sealed-part as provided by that sealing device is well defined, allowing for selecting the appropriate length for the third sealing device that is positioned in-between the first and the second sealing device of which one is normally at each end of the sealed-part of the conduit.

In an embodiment of a pipe transit system provided by the method according to the invention, at least one of the sealing devices is free from metal parts for tightening and sealing. Thus, the sealing device provides sealing immediately after insertion into the conduit.

In an embodiment of a pipe transit system provided by the method according to the invention, at least one of the sealing devices comprises a vulcanized fire-resistant rubber plug. Preferably, each of the sealing devices comprises a vulcanized fire-resistant rubber plug. Advantageously, these are already commercially available in many different dimensions. Further, the material is endothermic in nature, so that it takes a long time before an increase in temperature becomes significant and changes properties of the material.

The invention as defined in appended claim 1 provides for a method for providing a pipe transit system comprising:
- providing a conduit having an inner wall and at least one pipe extending through the conduit in an axial direction thereof so that the conduit has a pipe-part that is occupied by the at least one pipe,
- inserting and a first and a second sealing device in the conduit, each for sealing between an inner wall of the conduit and the at least one pipe so that the conduit has a sealed-part.

The method further comprises:
- ensuring that in the sealed-part between the first and the second sealing device at least one third sealing device is positioned for sealing between the inner wall of the conduit and the at least one pipe.

Each of the first, the second and the third sealing device is a separate entity and is unconnected to any of the other respective sealing devices. By using the method according to the invention it will be possible to insert the first and the second sealing device when the third sealing device has already been positioned in the conduit. Consequently, less volume is available into which the air can be compressed when the first and/or the second sealing device is/are inserted. As a consequence of that, the worker inserting the first and/or the second sealing device will experience a resistance against further insertion due to the pressurized air. That will remind the worker to wedge in a screwdriver or similar device between the inner wall of the conduit and the sealing device or the outer surface of the pipe and the sealing device. This allows for a drop of the air pressure in the gap between the third sealing device and the first or the second sealing device, down to atmospheric levels. Thus, on heating the conduit, for instance due to exposure to a nearby fire, the air pressure in the air gap will only increase from atmospheric level instead of from a level that was higher due to compression of air into the small air gap. Furthermore, the presence of the small air gaps will provide good thermal insulation.

In the method according to the invention, the method comprises inserting in the conduit the third sealing device before insertion both of the first and the second sealing device, ensuring that the above-described possibility is turned into reality.

In an embodiment of a method not falling within the scope of the invention, the method comprises inserting in the conduit one of the first or the second sealing device before inserting the third sealing device. In some circumstances all the sealing devices are inserted from one end of the conduit. For this embodiment, it preferably applies that after inserting the third sealing device, the air pressure in the air gap between the third sealing device and the first or the second sealing device is allowed to drop down to atmospheric levels, for instance by wedging in a screwdriver between one of the inserted sealing devices and the inner wall of the conduit or the outer wall of the pipe.

In general, it applies that for each of the method embodiments described above, an increased air pressure in an air gap between inserted sealing devices is allowed to drop down to atmospheric levels, for instance by wedging in a screwdriver or a similar type of device, between the respective sealing device and the inner wall of the conduit and/or the outside of the pipe. After establishing an atmospheric pressure in the air gap, that screwdriver or similar device can be removed so that the complete sealing can be (re-)established.

The invention will now further be explained with the aid of a drawing, in which:
Fig 1 shows schematically in cross-section a first embodiment of a pipe transit system provided by a method according to the invention;
Fig. 2 shows schematically in cross-section a second embodiment of a pipe transit system provided by a method according to the invention;
Fig. 3 shows schematically in cross-section a third embodiment of a pipe transit system provided by a method according to the invention;
Fig. 4 shows schematically in cross-section a fourth embodiment of a pipe transit system provided by a method according to the invention;
Fig. 5 shows schematically in cross-section a fifth embodiment of a pipe transit system provided by a method according to the invention;
Fig. 6 shows schematically in cross-section a sixth embodiment of a pipe transit system provided by a method according to the invention;
Fig. 7 shows schematically in cross-section a seventh embodiment of a pipe transit system provided by a method according to the invention; and
Fig. 8 shows schematically in cross-section a set-up for testing before and after exposure to fire the watertightness of embodiments of a pipe transit system provided by a method according to the invention.

### Detailed Description of the Figures

In the drawing, like parts have like references.

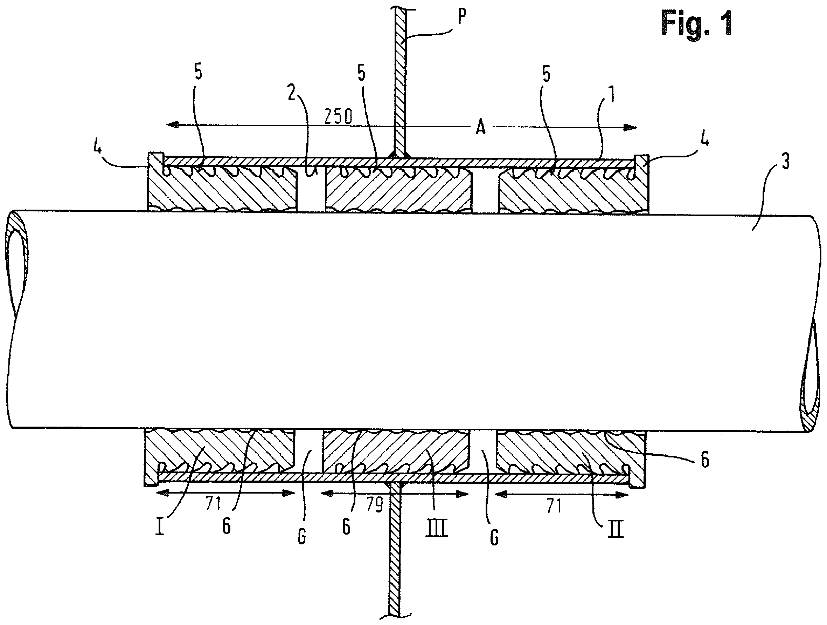

Fig 1 shows schematically in cross-section a first embodiment of a pipe transit system provided by a method according to the invention. The system comprises a conduit 1 which has an inner wall 2. In this example, the conduit is an integral part of a partition P. However, it will be understood that in general the conduit 1 can also be bolted or welded into an opening provided in partition P. The pipe 3 extends through the conduit 1 in an axial direction A. Accordingly, the conduit 1 has a pipe-part that is occupied by pipe 3. The system further comprises a first and a second sealing device I, II, inserted in the conduit 1. Each of these sealing devices I, II is for sealing between an inner wall 2 of the conduit 1 and the pipe 3, so that the conduit 1 also has a sealed-part. In this sealed-part, between the first and the second device I, II a third sealing device III is positioned also for sealing between the inner wall 2 of the conduit 1 and the pipe 3. Each of the first, the second and the third sealing device I, II, III is a separate entity. Each of the first, the second and the third sealing device, I, II, III is unconnected to any of the other respective sealing devices I, II, III. Small air gaps G are present between the sealing devices I, II, III.

In this example, the first and the second sealing device I, II each have a flange 4 for hindering a full insertion of that sealing device into the conduit 1.

The third sealing device III is flangeless. Preferably, at least one of the first, the second, and the third sealing device I, II, III is free from metal parts for tightening the sealing. Ideally, this applies to each of the first, the second, and the third sealing device I, II, III. Preferably, at least one of the first, the second and the third sealing device I, II, III comprises a vulcanized fire-resistant rubber plug. More preferably, this applies to each of the first, the second, and the third sealing device I, II, III.

Further, it is preferable that the first, the second, and the third sealing device I, II, III is provided with outer ribs 5 having tops spaced apart in longitudinal direction A for realizing, in use, annular contact surfaces which are each closed in itself in a circumferential direction between the sealing device I, II, III and the inner wall 2 of the conduit 1. Further, equally preferable, it applies that at least one of the first, the second, and the third sealing device I, II, III is provided with inner ribs having tops spaced apart in a longitudinal direction for realizing, in use, annular contact surfaces which are closed in itself in a circumferential direction between the respective sealing device and the pipe 3.

The vulcanized fire-resistant rubber is preferably of a silicon based rubber. It is possible that at least one of the first, the second, and the third sealing device I, II, III comprises at least two segmental parts.

The sealing device I, II are preferably as described in WO 2004/111513 A1. In that reference, also the outer ribs are more clearly shown. Plugs which are very useful as sealings in embodiments of the present invention, are commercially available from the Applicant, as promoted under the trademark name "SLIPSIL" plugs. Notably, because of the larger number of ribs, the mechanical stability is very good, providing good resistance to deformation. The air gaps G remain air gaps G. This also ensures that the thermal insulation provided by the air gaps remains intact.

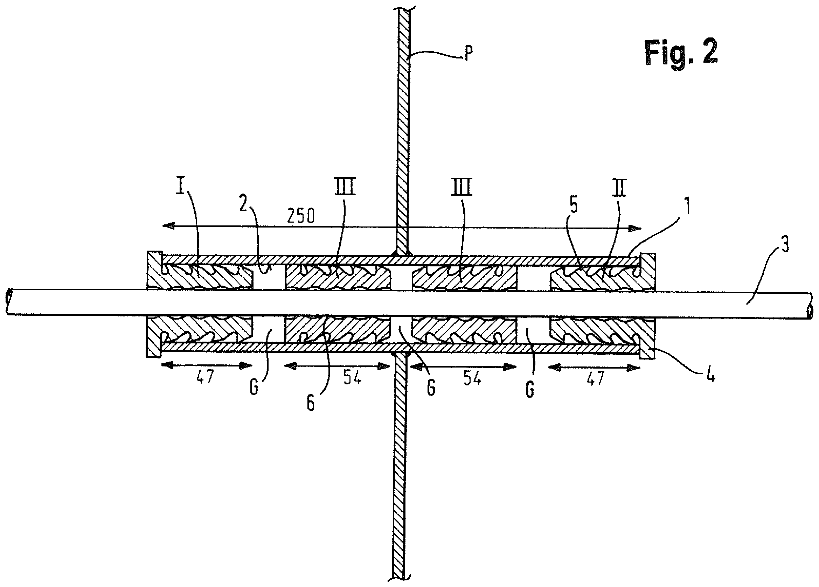

The third sealing device III is preferably also in the shape of a plug, for instance, as shown in WO 2008/023058, particularly Figs. 2-10. Such plugs elastically expand somewhat in transverse direction upon an axially applied pressure. Of course, this elastic expansion is only possible if the plug is not inserted in a conduit. When such a sealing device sealing against the inner wall of that conduit and is then subjected to an axially applied pressure, the annular contact surfaces which extend in circumferential direction extend in axial direction. That is, the width of these annular contact surfaces will be enhanced, improving the sealing integrity. This will also further improve the mechanical stability without loss of the air gaps as the air cannot escape. This leads to an improved sealing.

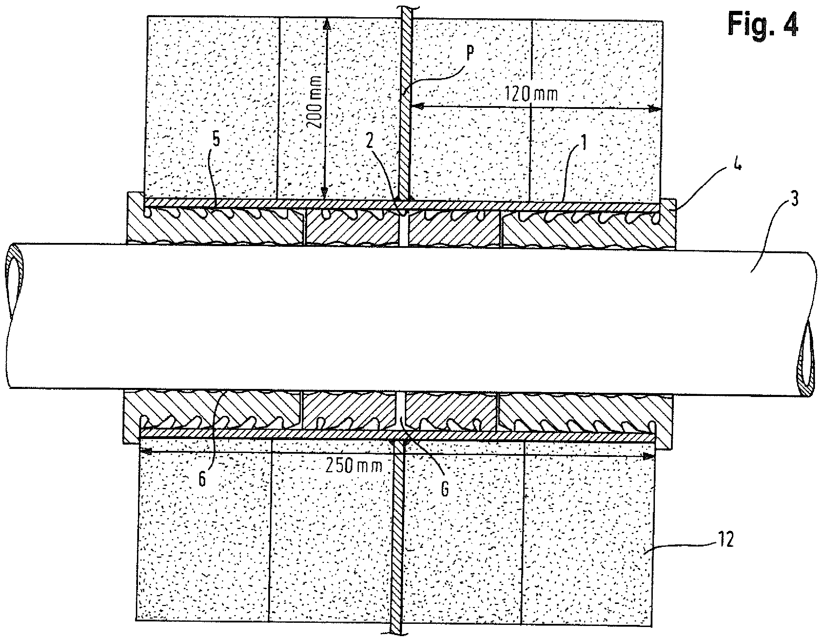

It is to be noted that the invention can also be applied in a situation in which more than one pipe extends through the conduit 1. Cross-sections of suitable sealing devices are shown in WO 2004/111513 A1, particularly Fig. 4(a) - 4(e).

Although in a case in which the first and second sealing device I, II each have a flange, the number of these first and second sealing devices is limited, the number of third sealing devices III can be higher than one. The number of third sealing devices III depends on the length of the conduit 1, the length of the first and the second sealing device I, II and the length of the third sealing device III. Fig. 2 shows an embodiment in which two third sealing devices are positioned between the first and the second sealing device I, II.

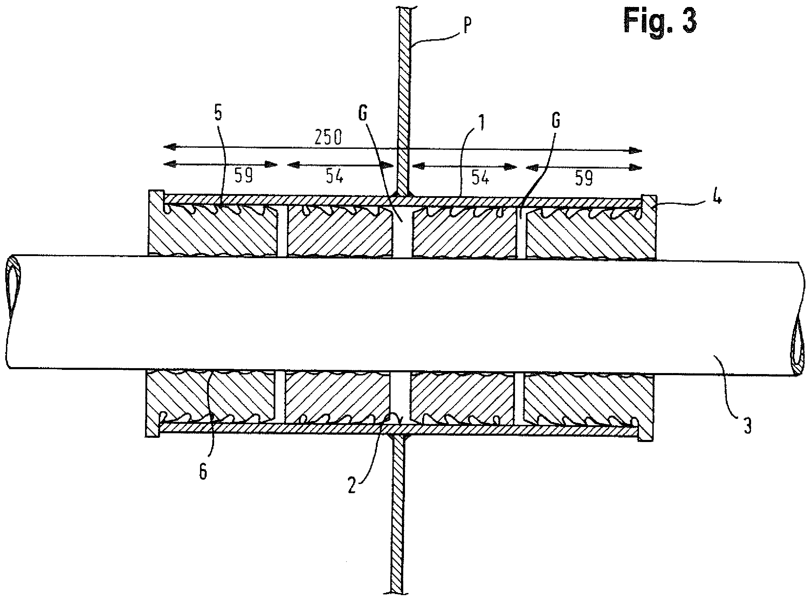

Fig. 3 shows that the air gaps G between the respective sealing devices I, II, II can be smaller, all depending on the length of the conduit and the length of the respective sealing devices. Fig. 4 shows a further reduction of the length of the air gaps G between the respective sealing devices I, II, III. Preferably, the sealed-part has an axial length which corresponds to the length of the conduit 1. In such a situation, the air gaps G are minimal in terms of their width in axial direction. The sum of the axial lengths of the first, the second and the third sealing devices I, II, III corresponds to the axial length of the conduit 1. Also for this situation, the axial width of the air gaps G is minimal. As explained above, the mechanical stability is further improved when the air gaps G are smaller. The air gaps G remain a good insulation, also when the width (in axial direction) is small.

In the embodiment shown in Fig. 4, the conduit is at each end thereof provided with a retainer 7 for retaining at that end one of the first and the second sealing devices I, II in the conduit 1. As shown, conduit 1 can be provided with a flange 8 to which the retainer 7 can be attached, for instance, by means of bolts and nuts. Clearly, the retainer can only be applied after insertion of the first or the second sealing devices I, II.

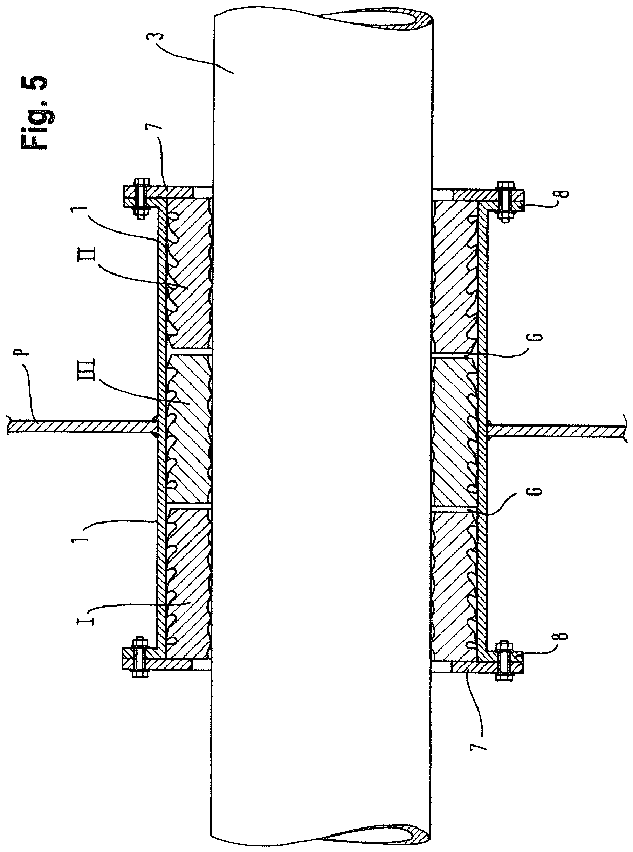

As seen in Fig. 5, in an embodiment, each of the sealing devices I, II, III is flangeless and preferably identical to any of the respective other sealing devices.

For a more detailed description of the sealing devices I, II, III as shown inn Fig. 5, reference is made to WO 2008/023058 of the present Applicant, particularly Figs. 2-10 of that document. The flangeless plugs are referred to as so-called "DYNATITE" plugs, also commercially available. As explained above, these plugs are designed such that a sealing elastically expands in a transverse direction upon axially applied pressure. This results in annular contact surfaces which expand over a larger width, that is in axial direction, as compared with the situation without an axially applied pressure. The annular contact surfaces are present on the inside and the outside of the sealing device. An advantage of using these plugs as sealing devices in embodiments of the present invention is that upon axially applied pressure, the plugs will obtain a firmer grip on the pipe 3.

The pipe transit system as proposed in this application is extremely suitable for a situation in which metal pipes extend through a conduit and "watertightness after fire" is required.

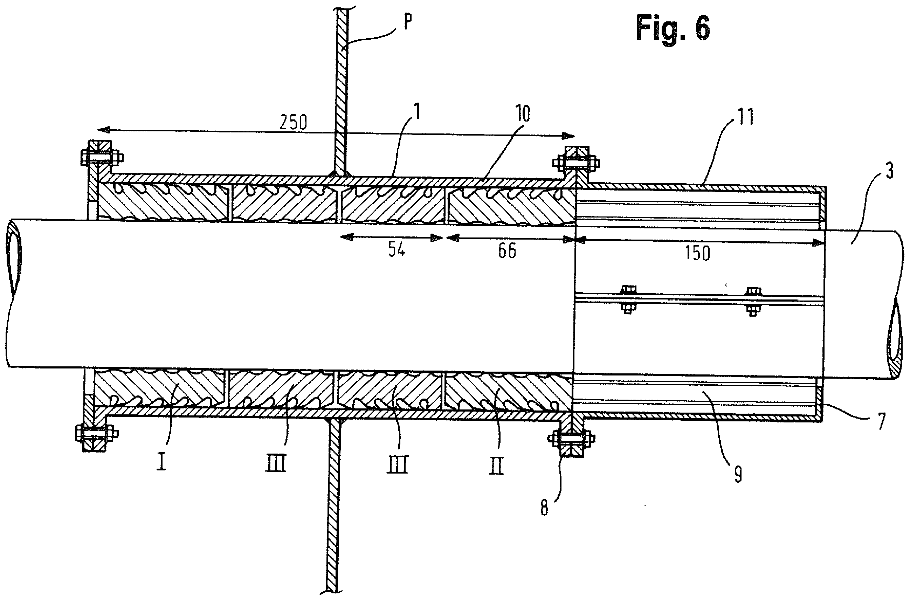

Fig. 6 shows an embodiment of a pipe transit system provided by a method according to the invention in which the system comprises four sealing devices, namely the first and the second sealing device I, II and two third sealing devices III. Conduit 1 is provided with the retainer 7. Between retainer 7 and the second sealing device II a thermally expandable device 9 is positioned. For this embodiment, conduit 1 is a so-called multi-part conduit having a main part 10 for holding each of the first, the second, and the third sealing devices I, II, III; and a sleeve-part 11 that is mountable to the main part 10 for holding the thermally expandable device 9. The sleeve-part 11 may comprise two shells which along an axial direction are mountable to each other. A transition from the sleeve-part 11 to the main part 10 is preferably free from diameter reducing structures.

The thermally expandable device 9 may be a multi-part device 9. The device may also comprise layers which are concentrically oriented. It is also possible the device comprises a wrappable device, for instance a length of sheet which can be wrapped around pipe 3. The device may comprise ethylphenolacetate (EVA). Examples of a thermally expandable device that can be used in such an embodiment can be found in WO 2009/090247 A1.

If pipe 3 is of metal, then the thermally expandable device 9 will expand, which it can only do in an axial direction A, in the direction of the sealing device I, II, III. These sealing devices will then experience an axially applied pressure, and tend to expand in a transverse direction. As explained above, this will result in annular contact surfaces which extend over a larger width, that is in axial direction, as compared with the situation without axially applied pressure. It follows that upon exposure to a nearby fire, the sealing device II and possible more will obtain a firmer grip on pipe 3 and the inner wall 2 of conduit 1. Subsequently, the watertightness after fire is very good.

The embodiment shown in Fig. 6 is equally very suitable for a situation in which a weakenable pipe, for instance a plastic pipe, extends axially through the conduit 1. Also the other embodiments shown may be suitable for plastic pipes if, at least one of the first, the second, and the third sealing devices I, II, III comprises a rubberlike thermally expandable material having a component which causes the material upon exposure to heat to expand to an extent which is much more than the extent to which the material not having these components would expand. This component could be expandable graphite and/or intercalated graphite. If the component causes expansion of the material at the softening temperature of LDPE and/or HDPE, then it is almost certain that the embodiment is suitable for each and every plastic pipe as softening temperatures of LDPE and/or HDPE are amongst the lowest for engineering plastic.

As it is often not known on which side of a partition P a fire will break out, each embodiment of a transit system according to the invention is preferably symmetrical, having an imaginary transverse cross-sectional plane of the conduit as the (mathematical) mirror plane. This plane may coincide with partition P.

Conduit 1 is preferably made of metal or hard engineering plastic which is not thermally softenable.

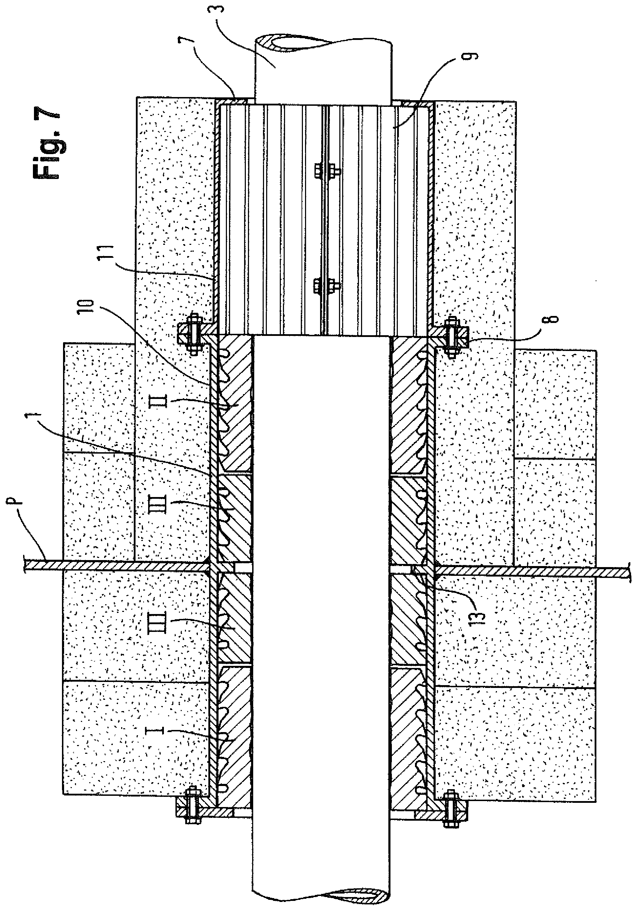

Fig. 7 shows an embodiment which is very similar to the embodiment shown in Fig. 6. However, in Fig. 7 the conduit 1 is internally provided with blocking elements 13 for preventing further displacement of at least one entire first, second or third sealing device I, II, III in the conduit. Thus, the sealing devices II and III in the form of plugs as shown and between the blocking elements 13 and the thermally expandable device 9 will be axially compressed even further, as pressure is applied from one side by the expansion of the thermally expandable device and the plugs are kept at their position at the other side. The annular contact surfaces will enlarge in the axial direction, improving the sealing even further.

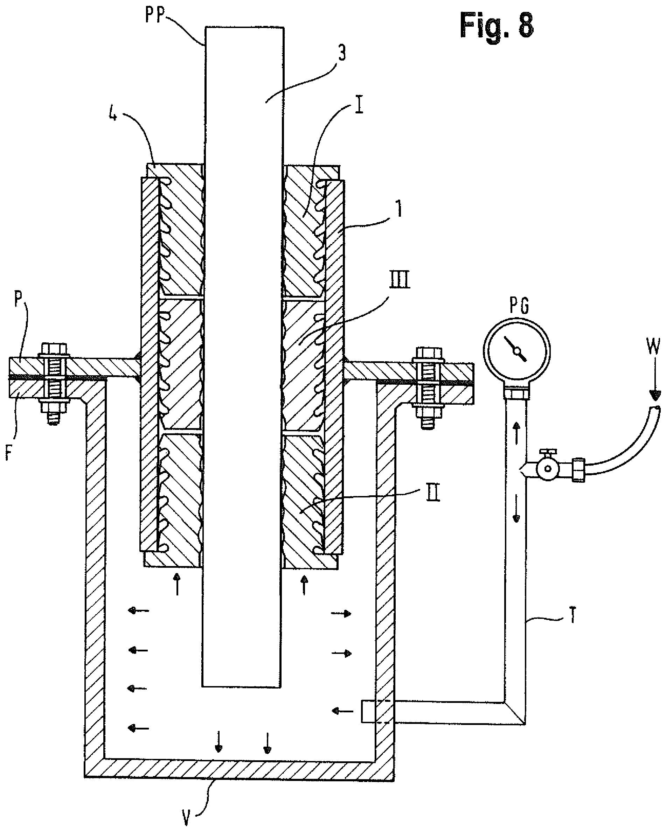

Fig. 8 shows a test tube for testing the watertightness of embodiments of a pipe transit system provided by a method according to the invention, both before and after exposure to a fire. As shown, a part of the partition P in which the conduit 1 is mounted tightly and sealingly fixed against an upper outerward flange F of a vessel V. Water can enter the vessel V via tube T. The water pressure can be measured by a pressure gauge PG. Pipe-part PP is sealed off by a blind plug (not shown). With this test set-up, it has been shown that the watertightness is maintained for each and every embodiment shown above. When the watertightness measured before exposure to a fire as compared to the watertightness as measured after exposure to a fire, it turned out that the watertightness was still maintained, at least for 30 minutes up to 1 bar, and for a number of embodiments even up to weeks at a water pressure of 4 bar. For embodiments as shown in Figs. 6 and 7 it applies that the watertightness is after exposure to a fire even better than before exposure to a fire, in that it can sustain after exposure to a fire an even higher water pressure.

For each embodiment clearly the sealing at the unexposed side of the conduit remained fully intact or had even been improved. "Watertightness after fire" has been achieved.

The embodiment shown in Fig. 4 shows insulation material 12 applied against the outer wall of the conduit and extending by about 200 mm in radial direction. Insulation should ideally be applied to both sides as one never knows on which side a fire will take place. With the insulation it is possible to control to an extent the transport of heat into the conduit 1. A person skilled in the art will by routine experiments be able to work out the optimal dimensions for the conduit, the sealing device, the length of the thermally expandable device 9 (if applicable) and the amount and dimensions of the insulation, which will often be a form of mineral wool. However, it has turned out that embodiments of the present invention remained watertight also when no insulation 12 was applied. This applies particularly for the embodiments shown in Figs. 6 and 7 which need heat input for improving the stability and integrity of the sealing.

Also the length of the conduit is a parameter which can be explored and optimized for certain situations. Although the drawings often show a certain length, also shorter conduits can be used in embodiments of a system according to the present invention.

As indicated earlier above, the invention is not limited to the embodiments shown in the drawing. Many modifications are possible. The sealing devices I, II, III can be such that multiple pipes 3 can extend through the conduit 1. Plugs which can be used in such embodiments are shown in WO 2004/111513 A1, Figs. 4(a) - 4(e).

Although only shown in Fig. 7, it is possible that the inner wall 2 of conduit 1 is also in other embodiments provided with a threshold or blocking element 13 to ensure that the third sealing devices III are not inserted too deeply and to ensure that the sealing improves when an axially applied pressure is present. Often, such a threshold or blocking element 13 coincides with the imaginary plane in which the partition P is positioned. Such a blocking element is thus particularly suitable for embodiments shown in Fig. 2, 3, 4 and 6.

The invention is not limited to the embodiments shown in the drawing. Many modifications are possible. Each of these modifications are understood as being well within the framework of the invention as long as they fall within the scope of protection defined by the appended claims.

## Claims

1. Method for providing a pipe transit system comprising:
providing a conduit (1) having an inner wall and at least one pipe (3) extending through the conduit in an axial direction thereof so that the conduit has a pipe-part that is occupied by the at least one pipe,
inserting a first and a second sealing (I, II) in the conduit, each for sealing between an inner wall of the conduit and the at least one pipe so that the conduit also has a sealed-part,
wherein the method is **characterised by**: ensuring that in the sealed-part between the first and the second sealing device (I, II) at least one third sealing device (III) is positioned for sealing between the inner wall of the conduit and the at least one pipe,
wherein each of the first, the second and the third sealing device is a separate entity and is unconnected to any of the other respective sealing devices,
wherein the method comprises inserting in the conduit the third sealing device before inserting both of the first and second sealing devices, and wherein the method comprises allowing for a drop of the air pressure in the gap (G) between the third sealing device and the first or the second sealing device, down to atmospheric levels, wherein the sealed-part has an axial length which corresponds to the length of the conduit.

2. Method according to claim 1, wherein the sum of the axial lengths of the first, the second and the third sealing device (I, II, III) corresponds to the axial length of the conduit.

3. Method according to claim 1 or 2, wherein of the first and the second sealing device at least one has a flange (4) for hindering a full insertion of that sealing device into the conduit.

4. Method according to any one of claims 1-3, wherein at least one of the first, second and third sealing devices is free from metal parts for tightening the sealing.

5. Method according to any one of claims 1-4, wherein each of the first, the second and the third sealing device is free from metal parts for tightening the sealing.

6. A Method according to any one of claims 1-5, wherein at least one of the first, the second and the third sealing device comprises a vulcanized fire-resistant rubber plug.

7. A method according to any one of claims 1-6, wherein at least one of the first, the second and the third sealing device is provided with outer ribs (5) having tops spaced apart in longitudinal direction for realizing, in use, annular contact surfaces which are each closed in itself in a circumferential direction between the sealing device and the inner wall of the conduit.

8. A method according to any one of the claims 1-7, wherein at least one of the first, the second and the third sealing device is provided with inner ribs (6) having tops spaced apart in longitudinal direction for realizing, in use, annular contact surfaces which are closed in itself in a circumferential direction between the sealing device and the at least one pipe.

9. A method according to any one of the claims 1-8, wherein at least one of the first, the second and the third sealing device comprises at least two segmental parts.

10. A method according to any one of the claims 1-9, wherein the conduit is of metal or a hard engineering plastic which is not thermally softenable.

11. A method according to any one of the claims 1-10, wherein the system is symmetrical, an imaginary transverse cross-sectional plane of the conduit being the mirror plane.

12. A method according to any one of the claims 1-11, wherein at least one of the first, the second and the third sealing device comprises a rubberlike thermally expandable material having a component which causes the material on exposure to heat to expand to an extent which is much more than the extent to which that material not having these components would expand.

13. A method according to any one of claims 1-12, wherein at least one of the first, the second and the third sealing device elastically expands in transverse direction upon an axially applied pressure.

14. A method according to any one of the previous claims comprises: providing at at least one end of the conduit a retainer (7) for retaining at that end each of the first, the second and the third sealing devices in the conduit.

15. A method according to any one of claims 1-14, wherein the conduit is internally provided with a blocking element (13) for preventing further displacement of at least one of the first, the second or the third sealing device inwards of the conduit.

16. A method according to any one of claims 1-15, wherein air in air gaps formed in the sealed-part between the respective sealing devices is at atmospheric pressure.

## Patentansprüche

1. Verfahren zum Bereitstellen eines Rohrtransitsystems, umfassend:
Bereitstellen einer Leitung (1) mit einer Innenwand und mindestens einem Rohr (3), das durch die Leitung in dessen Axialrichtung verläuft, so dass die Leitung einen Rohrteil hat, der von dem mindestens einen Rohr belegt ist,
Einführen einer ersten und zweiten Abdichtung (I, II) in die Leitung, wobei jede zum Abdichten zwischen einer Innenwand der Leitung und dem mindestens einen Rohr dient, so dass die Leitung auch einen abgedichteten Teil hat,
wobei das Verfahren **gekennzeichnet ist durch**:
Gewährleisten, dass im abgedichteten Teil zwischen der ersten und zweiten Abdichtungseinrichtung (I, II) mindestens eine dritte Abdichtungseinrichtung (III) angeordnet ist, zum Abdichten zwischen der Innenwand der Leitung und dem mindestens einen Rohr,
wobei jede von der ersten, der zweiten und der dritten Abdichtungseinrichtung ein separates Objekt ist und mit jeglichen der anderen jeweiligen Abdichtungseinrichtungen unverbunden ist,
wobei das Verfahren ein Einführen, in die Leitung, der dritten Abdichtungseinrichtung umfasst, bevor beide von der ersten und der zweiten Abdichtungseinrichtung eingeführt werden, und wobei das Verfahren ein Zulassen eines Abfalls des Luftdrucks im Spalt (G) zwischen der dritten Abdichtungseinrichtung und der ersten oder der zweiten Abdichtungseinrichtung hinunter auf atmosphärische Niveaus umfasst, wobei der abgedichtete Teil eine axiale Länge hat, die der Länge der Leitung entspricht.

2. Verfahren nach Anspruch 1, wobei die Summe der axialen Längen der ersten, der zweiten und der dritten Abdichtungseinrichtung (I, II, III) der axialen Länge der Leitung entspricht.

3. Verfahren nach Anspruch 1 oder 2, wobei von der ersten und der zweiten Abdichtungseinrichtung mindestens eine einen Flansch (4) zum Verhindern eines vollständigen Einführens dieser Abdichtungseinrichtung in die Leitung hat.

4. Verfahren nach einem der Ansprüche 1-3, wobei mindestens eine von der ersten, zweiten und dritten Abdichtungseinrichtung frei von metallischen Teilen zum Festigen der Abdichtung ist.

5. Verfahren nach einem der Ansprüche 1-4, wobei jede der ersten, der zweiten und der dritten Abdichtungseinrichtung frei von metallischen Teilen zum Festigen der Abdichtung ist.

6. Verfahren nach einem der Ansprüche 1-5, wobei mindestens eine der ersten, zweiten und dritten Abdichtungseinrichtung einen vulkanisierten feuerbeständigen Gummistopfen aufweist.

7. Verfahren nach einem der Ansprüche 1-6, wobei mindestens eine der ersten, zweiten und dritten Abdichtungseinrichtung mit äußeren Rippen (5) versehen ist, die Oberteile haben, die in Längsrichtung beabstandet sind, zum Verwirklichen, während der Verwendung, von ringförmigen Kontaktflächen, die jeweils in sich in einer Umfangsrichtung zwischen der Abdichtungseinrichtung und der Innenwand der Leitung geschlossen sind.

8. Verfahren nach einem der Ansprüche 1-7, wobei mindestens eine der ersten, zweiten und dritten Abdichtungseinrichtung mit inneren Rippen (6) versehen ist, die Oberteile haben, die in Längsrichtung beabstandet sind, zum Verwirklichen, während der Verwendung, von ringförmigen Kontaktflächen, die in sich in einer Umfangsrichtung zwischen der Abdichtungseinrichtung und dem mindestens einen Rohr geschlossen sind.

9. Verfahren nach einem der Ansprüche 1-8, wobei mindestens eine der ersten, zweiten und dritten Abdichtungseinrichtung mindestens zwei Segmentteile umfasst.

10. Verfahren nach einem der Ansprüche 1-9, wobei die Leitung aus Metall oder einem harten technischen Kunststoff ist, der nicht thermisch erweichbar ist.

11. Verfahren nach einem der Ansprüche 1-10, wobei das System symmetrisch ist, wobei eine imaginäre transversale Querschnittsebene der Leitung die Spiegelebene ist.

12. Verfahren nach einem der Ansprüche 1-11, wobei mindestens eine der ersten, zweiten und dritten Abdichtungseinrichtung ein gummiartiges thermisch expandierbares Material mit einer Komponente umfasst, die das Material, wenn es Wärme ausgesetzt wird, zum Expandieren zu einem Ausmaß veranlasst, das viel größer ist als das Ausmaß, zu welchem das Material expandieren würde, das diese Komponenten nicht hat.

13. Verfahren nach einem der Ansprüche 1-12, wobei mindestens eine der ersten, zweiten und dritten Abdichtungseinrichtung elastisch in Transversalrichtung auf einen axial ausgeübten Druck hin expandiert.

14. Verfahren nach einem der vorstehenden Ansprüche, das umfasst: Bereitstellen an mindestens einem Ende der Leitung einer Aufnahme (7) zum Aufnehmen an diesem Ende von jedem der ersten, der zweiten und der dritten Abdichtungseinrichtung in der Leitung.

15. Verfahren nach einem der Ansprüche 1-14, wobei die Leitung intern mit einem Blockierelement (13) versehen ist zum Verhindern einer weiteren Verschiebung von mindestens einem der ersten, der zweiten oder der dritten Abdichtungseinrichtung nach einwärts der Leitung.

16. Verfahren nach einem der Ansprüche 1-15, wobei Luft in Luftspalten, die im abgedichteten Teil zwischen den jeweiligen Abdichtungseinrichtungen ausgebildet sind, auf atmosphärischem Druck ist.

## Revendications

1. Procédé pour ménager un système de passage de tuyaux comprenant :
ménager un conduit (1) ayant une paroi interne et au moins un tuyau (3) s'étendant à travers le conduit selon sa direction axiale de sorte que le conduit ait une partie pour tuyau qui est occupée par l'au moins un tuyau,
insérer un premier et un deuxième dispositif d'étanchéité (I, II) dans le conduit, chacun pour assurer l'étanchéité entre une paroi interne du conduit et l'au moins un tuyau de sorte que le conduit comporte également une partie étanche,
le procédé étant **caractérisé en ce que** dans la partie étanche entre le premier et le deuxième dispositif d'étanchéité (I, II), au moins un troisième dispositif d'étanchéité (III) est placé pour assurer l'étanchéité entre la paroi interne du conduit et l'au moins un tuyau,
dans lequel chacun des premier, deuxième et troisième dispositifs d'étanchéité est une entité distincte et n'est relié à aucun des autres dispositifs d'étanchéité respectifs,
dans lequel le procédé comprend l'insertion dans le conduit du troisième dispositif d'étanchéité avant d'insérer chacun des premier et deuxième dispositifs d'étanchéité, et
dans lequel le procédé comprend le fait de permettre une chute de la pression d'air dans l'interstice (G) entre le troisième dispositif d'étanchéité et le premier ou le deuxième dispositif d'étanchéité, jusqu'à des niveaux atmosphériques, la partie étanche ayant une longueur axiale qui correspond à la longueur du conduit.

2. Procédé selon la revendication 1, dans lequel la somme des longueurs axiales du premier, du deuxième et du troisième dispositif d'étanchéité (I, II, III) correspond à la longueur axiale du conduit.

3. Procédé selon la revendication 1 ou 2, dans lequel le premier et le deuxième dispositif d'étanchéité comportent au moins une bride (4) pour empêcher une insertion complète de ce dispositif d'étanchéité dans le conduit.

4. Procédé selon l'une quelconque des revendications 1 à 3, dans lequel au moins l'un des premier, deuxième et troisième dispositifs d'étanchéité est exempt de pièces métalliques pour le serrage de l'étanchéité.

5. Procédé selon l'une quelconque des revendications 1 à 4, dans lequel chacun des premier, deuxième et troisième dispositifs d'étanchéité est exempt de parties métalliques pour le serrage de l'étanchéité.

6. Procédé selon l'une quelconque des revendications 1 à 5, dans lequel au moins l'un des premier, deuxième et troisième dispositifs d'étanchéité comprend un bouchon en caoutchouc ignifuge vulcanisé.

7. Procédé selon l'une quelconque des revendications 1 à 6, dans lequel au moins l'un des premier, deuxième et troisième dispositifs d'étanchéité est pourvu de nervures externes (5) ayant des sommets espacés dans la direction longitudinale pour réaliser, en utilisation, des surfaces de contact annulaires qui sont chacune fermées sur elles-mêmes dans une direction circonférentielle entre le dispositif d'étanchéité et la paroi interne du conduit.

8. Procédé selon l'une quelconque des revendications 1 à 7, dans lequel au moins l'un des premier, deuxième et troisième dispositifs d'étanchéité est pourvu de nervures intérieures (6) ayant des sommets espacés dans la direction longitudinale pour réaliser, en utilisation, des surfaces de contact annulaires qui sont fermées sur elles-mêmes dans une direction circonférentielle entre le dispositif d'étanchéité et l'au moins un tuyau.

9. Procédé selon l'une quelconque des revendications 1 à 8, dans lequel au moins l'un des premier, deuxième et troisième dispositifs d'étanchéité comprend au moins deux parties segmentaires.

10. Procédé selon l'une quelconque des revendications 1 à 9, dans lequel le conduit est en métal ou en un plastique industriel dur qui ne peut pas être ramolli thermiquement.

11. Procédé selon l'une quelconque des revendications 1 à 10, dans lequel le système est symétrique, un plan transversal imaginaire transversal du conduit étant le plan miroir.

12. Procédé selon l'une quelconque des revendications 1 à 11, dans lequel au moins l'un des premier, deuxième et troisième dispositifs d'étanchéité comprend un matériau expansible thermiquement analogue à du caoutchouc ayant un composant qui provoque l'expansion du matériau exposé à la chaleur dans une mesure qui est beaucoup plus grande que la mesure dans laquelle ce matériau n'ayant pas ces composants se dilaterait.

13. Procédé selon l'une quelconque des revendications 1 à 12, dans lequel au moins l'un des premier, deuxième et troisième dispositifs d'étanchéité se dilate élastiquement dans une direction transversale par une pression appliquée axialement.

14. Procédé selon l'une quelconque des revendications précédentes comprenant : la prévision, à au moins une extrémité du conduit, d'un dispositif de retenue (7) pour retenir à cette extrémité chacun des premier, deuxième et troisième dispositifs d'étanchéité dans le conduit.

15. Procédé selon l'une quelconque des revendications 1 à 14, dans lequel le conduit est intérieurement pourvu d'un élément de blocage (13) pour empêcher un déplacement supplémentaire d'au moins un des premier, deuxième ou troisième dispositifs d'étanchéité vers l'intérieur du conduit.

16. Procédé selon l'une quelconque des revendications 1 à 15, dans lequel l'air dans les interstices formés dans la partie étanche entre les dispositifs d'étanchéité respectifs est à la pression atmosphérique.
